# EUROPEAN PATENT SPECIFICATION

(11) **EP 2 365 212 B1**
(45) Date of publication and mention of the grant of the patent: **04.05.2016**
(21) Application number: 10156339.3
(22) Date of filing: 12.03.2010
(51) Int. Cl.: F03D 1/06

(54) **Arrangement and method to retrofit a wind turbine**
Anordnung und Verfahren zum Nachrüsten einer Windturbine
Agencement et procédé pour modification d'éolienne

(43) Date of publication of application: 14.09.2011
(73) Proprietor: Siemens Aktiengesellschaft, 80333 München (DE)
(72) Inventor: Stege, Jason, 7330 Brande (DK); Stiedsal, Henrik, 5000 Odense C (DK); Winther-Jensen, Martin, 4690 Haslev (DK)

(56) References cited:
- EP-A1- 1 695 813
- WO-A1-2004/092577
- WO-A1-2009/153344
- DE-A1-102007 006 643

## Description

The invention relates to an arrangement and to a method to retrofit a wind turbine.

Sometimes it is necessary to retrofit an existing and already mounted wind turbine to adjust its capability to the environmental conditions.

For example blades of the wind turbine may be dismantled from its hub and may be brought to the ground. A set of new blades, which may be longer than the old set of blades, may be installed at the hub to adjust the whole wind turbine.

The blades dismantled might be repaired or even reviewed for further use.

This kind of retrofit-work is time expensive and costly. Especially the needed work is expensive for offshore wind turbines as the work needs to be done at calm weather-conditions. Additionally special designed vessels with cranes are needed to dismantle and to install the blades.

Document DE 10 2007 006 453 A1 refers to a blade of a wind turbine. A retrofitting part is attached to the tip end of the blade. The retrofitting part covers at least partly the tip end of the blade like a cap. Certain areas within this cap are form-fitted to certain areas of the blade-surface. The blade and the cap are connected by screws or by welding.

It is therefore the aim of the invention to provide an arrangement and a method, which allows the retrofit of a wind turbine in an easy, time- and cost-efficient way.

This aim is reached by the features of claim 1 and by the features of claim 9.

Preferred embodiments of the invention are subject of the dependent claims.

According to the invention a wind turbine is retrofitted. For this purpose a blade of the wind turbine is prepared to be connected with the hub of the wind turbine. An extension unit is designed and prepared to elongate the blade. The extension unit is connected with the tip of the blade by a pressure, which is applied between the tip of the blade and the extension unit. The applied pressure is a low-pressure in relation to the barometric pressure of the wind turbine site.

In a preferred embodiment the blade is connected and stays connected with the hub during the retrofit-work. The retrofit work can be done on the site of the wind turbine very easily.

In a preferred embodiment the extension unit is a blade tip extender or a so called "winglet".

The invention allows the retrofit of the blade without further attachment, at the site of the wind turbine or even asides a factory.

Any finishing work can be completed immediately after attachment ensuring a quick mounting process

According to the invention a quick attachment and alignment of the extension unit is allowed.

The preferably used technical vacuum allows an one-step mounting process.

The invention does not incur that costs, which were needed according to the prior art to dismount the blade from the hub or rotor.

In a preferred embodiment a soft seal or an oversized seal is used to ensure the low pressure into the cavity. Thus the initial positioning of the extension unit does not need to be too precise. A matching surface for the structure inside the extension unit is used guide the extension unit into its correct position.

The extension unit may be formed as a winglet tip, as a blade tip extension, as a blade tip lightening receptor, as a blade "shoulder" trailing edge extension, or the like.

The invention is shown in more detail by help of figures.
FIG 1 shows a first embodiment of the invention, while
FIG 2 shows a second embodiment of the invention, while
FIG 3 shows an additional seal in view to FIG 2.

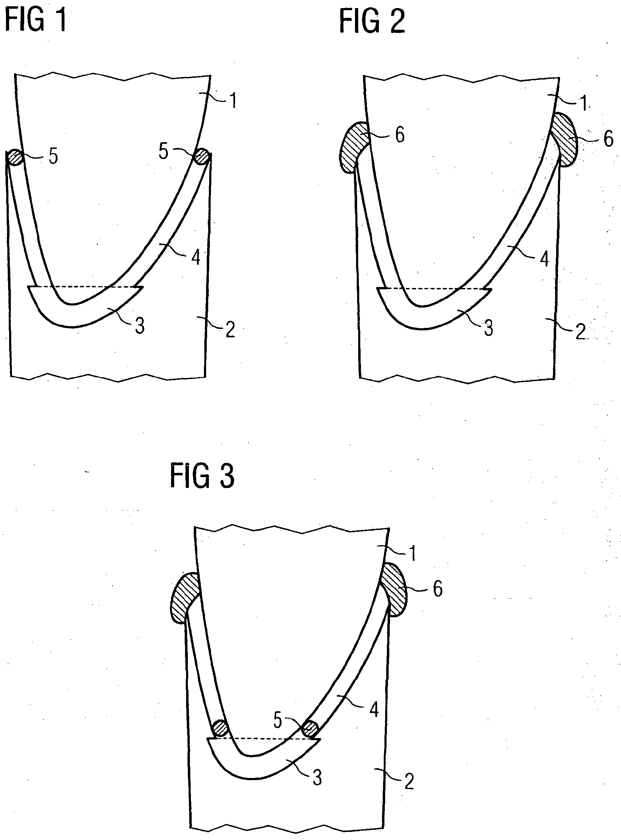

Referring to FIG 1 a blade 1 is prepared to be connected with a hub of a wind turbine (not shown here).

An extension unit 2 is designed and prepared to elongate the blade 1.

The extension unit 2 is connected with the tip of the blade 1 by a pressure, which is applied between the tip of the blade 1 and the extension unit 2.

This applied pressure is a low-pressure in relation to the ambient barometric pressure.

More specific the applied pressure may be a technical vacuum.

The pressure may be applied to a cavity 3, which is formed between the inner surface of the extension unit 2 and the outer surface of the tip of the blade 1.

In a preferred embodiment an internal seal 5 is provided and is used between the extension unit 2 and the blade 1. This internal seal 5 enables to keep and to maintain the applied pressure within the cavity 3.

Referring to FIG 2 an external seal 6 is used to maintain the applied pressure. The external seal 6 is connected to the outside of the extension unit 2, while the seal is provided as a so called "quick seal".

Referring to FIG 1 and to FIG 2 the extension unit 2 is manoeuvred onto the tip of the blade 1. The applied pressure (technical vacuum) ensures that the extension unit 2 stays in place.

If a technical vacuum is applied with a tight seal 5 or 6, the extension unit 2 will stay in place without the need for additional external attachments.

Referring to both figures an adhesive can be applied to the extension part. Thus the clamping force will provide a tight bond at a glue area 4 between the tip of the blade 1 and the extension unit 2.

The applied vacuum provides an even clamping force and will create a better bond between the used materials.

Accordingly an internal seal 5 and an external seal 6 are both present to keep and maintain the used applied pressure. Thus the low-pressure (or the technical vacuum) can be applied in a separate cavity.

Additionally the seals are used that the adhesive, which is present in the glue area 4, does not overflow the edges of the extension unit 2.

Due to the applied low-pressure or the technical vacuum it is possible to use a wide range of commercial and even cheap adhesives. Their adhesion-effect is supported by the applied pressure.

In another embodiment of the invention the applied low-pressure or technical vacuum is used within a resin infusion process to distribute the adhesive in an even manner.

In another embodiment of the invention the tip-extension unit 2 is provided with a further vacuum cup 3. This cup 3 may be used to ensure that surplus adhesive is collected there.

Additionally the cup 3 allows that the position of the extension shows some freedom for the adjustment of its position.

## Claims

1. Arrangement to retrofit a wind turbine,
- with a blade (1), which is prepared to be connected with the hub of the wind turbine,
- with an extension unit (2), which is designed and prepared to elongate the blade (1), **characterised by** the fact that,
- the extension unit (2) is connected with the tip of the blade (1) by a pressure, which is applied between the tip of the blade (1) and the extension unit (2),
- while the applied pressure is a low-pressure in relation to the ambient barometric pressure.

2. Arrangement according to claim 1, where the applied pressure is a technical vacuum.

3. Arrangement according to claim 1 or 2, where the extension unit (2) contains an integrated cavity (3), which is constructed and designed to enclose at least a part of the tip of the blade (1).

4. Arrangement according to claim 3, where the cavity (3) is constructed and designed in a way, that air is evacuated via an output to apply the pressure into the cavity.

5. Arrangement according to one of the claims 1 to 4, where the extension unit (2) is connected with the tip of the blade (1) by the applied pressure only.

6. Arrangement according to one of the claims 1 to 5, where a seal (5,6) is placed between the extension unit and the at least part of the tip of the blade (1) to ensure and maintain the applied pressure into the cavity (3).

7. Arrangement according to one of the claims 1 to 6, where the blade (1) is and stays connected with the hub of the wind turbine, while the retrofit is done.

8. Arrangement according to one of the claims 1 to 7, where the applied pressure is a low-pressure in relation to the ambient barometric pressure of the wind turbine site.

9. Method to retrofit a wind turbine,
- where a blade (1), which is prepared to be connected with the hub of the wind turbine, is elongated by an extension unit (2), **characterised by** the fact that
- pressure is applied between the extension unit (2) and the tip of the blade (1) for the elongation,
- where the applied pressure is a low pressure in relation to the ambient barometric pressure.

10. Method according to claim 9, where a technical vacuum is applied as pressure.

11. Method according to claim 9 or 10, where a cavity (3) of the extension unit (2) encloses at least a part of the tip of the blade (1), while the pressure is applied into the cavity (3).

12. Method according to claim 11, where air is evacuated via an output from the cavity (3) to apply the pressure into the cavity (3).

13. Method according to one of the claims 9 to 12, where the extension unit (2) stays connected with the tip of the blade (1) by the applied pressure only.

14. Method according to one of the claims 9 to 13, where the blade (1) stays connected with the hub of the wind turbine during the retrofit.

15. Method according to one of the claims 9 to 14, where the applied pressure is a low-pressure in relation to the ambient barometric pressure of the wind turbine site.

## Patentansprüche

1. Anordnung zum Nachrüsten einer Windenergieanlage
- mit einem Blatt (1), das zum Verbinden mit der Nabe der Windenergieanlage vorgesehen ist,
- mit einer Erweiterungseinheit (2), die so ausgelegt und vorgesehen ist, dass sie das Blatt (1) verlängert, **dadurch gekennzeichnet, dass**
- die Erweiterungseinheit (2) durch einen Druck mit der Spitze des Blatts (1) verbunden ist, der zwischen der Spitze des Blatts (1) und der Erweiterungseinheit (2) angelegt wird,
- wobei es sich bei dem angelegten Druck in Bezug zum Umgebungsluftdruck um einen Unterdruck handelt.

2. Anordnung nach Anspruch 1, bei der es sich bei dem angelegten Druck um ein technisches Vakuum handelt.

3. Anordnung nach Anspruch 1 oder 2, bei der die Erweiterungseinheit (2) einen integrierten Hohlraum (3) enthält, der so konstruiert und ausgelegt ist, dass er zumindest einen Teil der Spitze des Blatts (1) umschließt.

4. Anordnung nach Anspruch 3, bei der der Hohlraum (3) so konstruiert und ausgelegt ist, dass zum Anlegen des Drucks im Hohlraum Luft über einen Ausgang evakuiert wird.

5. Anordnung nach einem der Ansprüche 1 bis 4, bei der die Erweiterungseinheit (2) nur durch den angelegten Druck mit der Spitze des Blatts (1) verbunden ist.

6. Anordnung nach einem der Ansprüche 1 bis 5, bei der eine Dichtung (5, 6) zwischen der Erweiterungseinheit und zumindest dem Teil der Spitze des Blatts (1) angeordnet ist, um den an den Hohlraum (3) angelegten Druck sicherzustellen und aufrechtzuerhalten.

7. Anordnung nach einem der Ansprüche 1 bis 6, bei der das Blatt (1) während des Nachrüstens mit der Nabe der Windenergieanlage verbunden ist und bleibt.

8. Anordnung nach einem der Ansprüche 1 bis 7, bei der es sich bei dem angelegten Druck um einen Unterdruck in Bezug auf den Umgebungsluftdruck am Standort der Windenergieanlage handelt.

9. Verfahren zum Nachrüsten einer Windenergieanlage,
- bei dem ein Blatt (1), das zum Verbinden mit der Nabe der Windenergieanlage vorgesehen ist, durch eine Erweiterungseinheit (2) verlängert wird, **dadurch gekennzeichnet, dass**
- zwischen der Erweiterungseinheit (2) und der Spitze des Blatts (1) für die Erweiterung Druck angelegt wird,
- wobei es sich bei dem angelegten Druck in Bezug zum Umgebungsluftdruck um einen Unterdruck handelt.

10. Verfahren nach Anspruch 9, bei dem als Druck ein technisches Vakuum angelegt wird.

11. Verfahren nach Anspruch 9 oder 10, bei dem ein Hohlraum (3) der Erweiterungseinheit (2) zumindest einen Teil der Spitze des Blatts (1) umschließt, während der Druck an den Hohlraum (3) angelegt wird.

12. Verfahren nach Anspruch 11, bei dem zum Anlegen des Drucks an den Hohlraum (3) Luft über einen Ausgang aus dem Hohlraum (3) evakuiert wird.

13. Verfahren nach einem der Ansprüche 9 bis 12, bei dem die Erweiterungseinheit (2) nur durch den angelegten Druck mit der Spitze des Blatts (1) verbunden bleibt.

14. Verfahren nach einem der Ansprüche 9 bis 13, bei dem das Blatt (1) beim Nachrüsten mit der Nabe der Windenergieanlage verbunden bleibt.

15. Verfahren nach einem der Ansprüche 9 bis 14, bei dem es sich bei dem angelegten Druck in Bezug auf den Umgebungsluftdruck am Standort der Windenergieanlage um einen Unterdruck handelt.

## Revendications

1. Agencement de modification d'une éolienne,
- avec une pale (1), qui est préparée pour être connectée avec le moyeu de l'éolienne,
- avec une unité d'extension (2), qui est conçue et préparée pour allonger la pale (1), **caractérisé par le fait que**
- l'unité d'extension (2) est connectée avec la pointe de la pale (1) par une pression, qui est appliquée entre la pointe de la pale (1) et l'unité d'extension (2),
- tandis que la pression appliquée est une pression basse par rapport à la pression barométrique ambiante.

2. Agencement selon la revendication 1, dans lequel la pression appliquée est un vide technique.

3. Agencement selon la revendication 1 ou 2, dans lequel l'unité d'extension (2) contient une cavité (3) intégrée, qui est construite et conçue pour enfermer au moins une partie de la pointe de la pale (1).

4. Agencement selon la revendication 3, dans lequel la cavité (3) est construite et conçue de telle manière que l'air est évacué par une sortie pour appliquer la pression à l'intérieur de la cavité.

5. Agencement selon l'une des revendications 1 à 4, dans lequel l'unité d'extension (2) est connectée avec la pointe de la pale (1) par la pression appliquée uniquement.

6. Agencement selon l'une des revendications 1 à 5, dans lequel un joint d'étanchéité (5, 6) est placé entre l'unité d'extension et l'au moins une partie de la pointe de la pale (1) pour garantir et maintenir la pression appliquée à l'intérieur de la cavité (3).

7. Agencement selon l'une des revendications 1 à 6, dans lequel la pale (1) est et reste connectée avec le moyeu de l'éolienne, tandis que le modification est effectué.

8. Agencement selon l'une des revendications 1 à 7, dans lequel la pression appliquée est une pression basse par rapport à la pression barométrique ambiante du site d'éolienne.

9. Procédé de modification d'une éolienne,
- dans lequel une pale (1), qui est préparée pour être connectée avec le moyeu de l'éolienne est allongée par une unité d'extension (2), **caractérisé par le fait que**
- une pression est appliquée entre l'unité d'extension (2) et la pointe de la pale (1) pour l'allongement,
- dans lequel la pression appliquée est une pression basse par rapport à la pression barométrique ambiante.

10. Procédé selon la revendication 9, dans lequel un vide technique est appliqué comme pression.

11. Procédé selon la revendication 9 ou 10, dans lequel une cavité (3) de l'unité d'extension (2), enferme au moins une partie de la pointe de la pale (1), tandis que la pression est appliquée à l'intérieur de la cavité (3).

12. Procédé selon la revendication 11, dans lequel l'air est évacué par une sortie de la cavité (3) pour appliquer la pression à l'intérieur de la cavité (3).

13. Procédé selon l'une des revendications 9 à 12, dans lequel l'unité d'extension (2) reste connectée avec la pointe de la pale (1) par la pression appliquée uniquement.

14. Procédé selon l'une des revendications 9 à 13, dans lequel la pale (1) reste connectée avec le moyeu de l'éolienne pendant le modification.

15. Procédé selon l'une des revendications 9 à 14, dans lequel la pression appliquée est une pression basse par rapport à la pression barométrique ambiante du site d'éolienne.
